# EUROPEAN PATENT APPLICATION

(11) **EP 1 326 424 A2**
(43) Date of publication of application: **09.07.2003**
(21) Application number: 02258586.3
(22) Date of filing: 12.12.2002
(51) Int. Cl.: H04N 1/32, H04N 1/21

(54) **Image generating apparatus and verification data generation method**

(30) Priority: 28.12.2001 JP 2001400044
(71) Applicant: CANON KABUSHIKI KAISHA, Tokyo (JP)
(72) Inventor: Wakao, Satoru, Canon Kabushiki Kaisha, Tokyo (JP); Ikeda, Yasuyuki, Canon Kabushiki Kaisha, Tokyo (JP)
(74) Representative: Beresford, Keith Denis Lewis

(57) **Abstract**

An image generation apparatus, in generating verification data (digital signature or MAC) necessary for detecting an alteration in image data, generates secret information Ks necessary for the generation of the verification data, utilizing secret information A and secret information B. In this manner, the image generation apparatus makes difficult the leakage and the analysis of the secret information Ks, necessary for generation of the verification data for the image data, whereby the safety and the confidentiality of the secret information Ks can be improved.

## Description

### BACKGROUND OF THE INVENTION

### Field of the Invention

The present invention relates to an image generation apparatus and a verification data generation method for generating verification data required for verification whether image data are altered.

### Related Background Art

Recently there is commercialized a digital camera which digitizes and stores an optical image of an object.

Image data taken with a digital camera can be easily fetched into a personal computer, but are at the same time associated with a drawback of being easily altered on the personal computer. For this reason, the image data obtained with a digital camera have a reliability lower than that of a silver halide photograph and lack the ability as an evidence. Consequently there is proposed a digital camera system having a function of attaching a digital signature to the image data taken with the digital camera. A conventional digital camera system is disclosed for example in U.S. Patent No. 5,499,294 and Japanese Patent Application Laid-open No. 9-200730.

However, the conventional digital camera system, in which secret information necessary for generating a digital signature or a MAC (message authentication code) is managed by a single apparatus or a memory, is associated with a drawback that the location of the secret information can be analyzed and divulged. If the location of the secret information is analyzed and disclosed by a malignant user, the alteration of the image data cannot be verified in exact manner, whereby the reliability and the safety of the system may be threatened. Such situation is a severer problem particularly in a system in which same secret information is used in all the image generation apparatus.

### SUMMARY OF THE INVENTION

A concern of the present invention is to solve the above-described problems.

Another concern of the present invention, for solving the above-described problems, is to provide an image generation apparatus and a verification data generation method capable of rendering difficult leakage and analysis of secret information necessary for generating verification data (a digital signature, a MAC or the like) for image data, thereby improving the safety and the secrecy of the secret information.

An image generation apparatus, constituting one of preferred embodiments of the present invention, includes image generation means for generating image data, secret information generation means for generating secret information based on first information and second information, and verification data generation means for generating, utilizing the secret information, verification data necessary for verifying whether the image data have been altered.

A verification data generation method, constituting one of preferred embodiments of the present invention, includes a generation step of generating image data, a secret information generation step of generating secret information based on first information and second information, and a verification data generation step of generating, utilizing the secret information, verification data necessary for verifying whether the image data have been altered.

An image generation apparatus, constituting one of preferred embodiments of the present invention, includes image generation means for generating image data, secret information generation means for generating secret information based on first information and second information, and third information held by an external apparatus, and verification data generation means for generating, utilizing the secret information, verification data necessary for verifying whether the image data have been altered.

A verification data generation method, constituting one of preferred embodiments of the present invention, includes a generation step of generating image data, a secret information generation step of generating secret information based on first information and second information, and third information held by an external apparatus, and a verification data generation step of generating, utilizing the secret information, verification data necessary for verifying whether the image data have been altered.

Still other features of the present invention, and the advantages thereof, will become fully apparent from the following detailed description of the embodiments.

### BRIEF DESCRIPTION OF THE DRAWINGS

Fig. 1 is a view showing the configuration of an image verification system in a first embodiment;
Fig. 2 is a block diagram showing a principal functional configuration of an image generation apparatus 101 in the first embodiment;
Fig. 3 is a block diagram showing a principal functional configuration of a verification apparatus 20 in the first embodiment;
Fig. 4 is a view showing the process sequence of an image verification system in the first embodiment;
Fig. 5 is a view showing an example of a table T1;
Fig. 6 is a view showing the configuration of an image verification system in a second embodiment;
Fig. 7 is a block diagram showing a principal functional configuration of an image generation apparatus 10 in the second embodiment; and
Fig. 8 is a view showing the process sequence of an image verification system in the second embodiment.

### DESCRIPTION OF THE PREFERRED EMBODIMENTS

### (First embodiment)

In the following there will be described a preferred first embodiment of the present invention, with reference to the accompanying drawings.

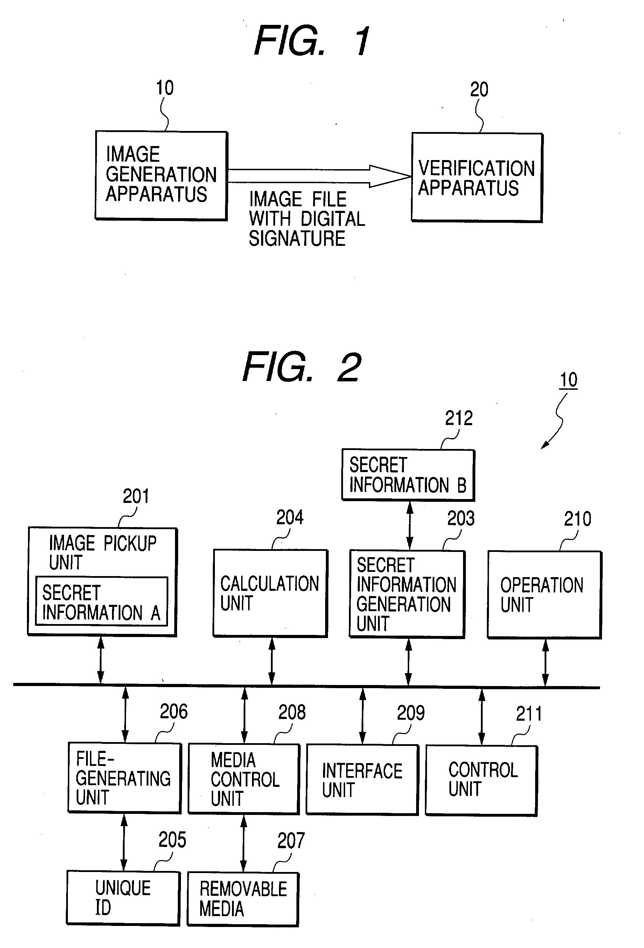

Fig. 1 is a view showing the configuration of an image verification system in a first embodiment. In the first embodiment, there will be explained a case where verification data, required for verifying whether image data have been altered, are a digital signature of the image data.

An image generation apparatus 10 has a function of generating image data of an object, and a function of generating an image file with a digital signature. The image file with the digital signature includes data such as image data, a digital signature for the image data, a unique ID of the image generation apparatus 10, additional information of the image data etc. The image generation apparatus 10 may be an image pickup apparatus such as a digital camera, a digital video camera or a scanner, or may be an apparatus equipped with a camera unit. Otherwise it may also be a facsimile apparatus or a copying apparatus, provided with an image reading unit.

A verification apparatus 20 has a function of executing a verification on the image file with the digital signature. The verification apparatus 20 can be an information processing apparatus such as a personal computer.

Fig. 2 is a block diagram showing the principal functional configuration of the image generation apparatus 10 of the present embodiment.

An image generation unit 201 is provided with an optical sensor such as a CCD (charge coupled device), a microprocessor etc. The image generation unit 201 is provided therein with a memory or an IC chip storing secret information A used as a basis of secret information Ks. The secret information A is used in common for plural image generation apparatus including the image generation apparatus 10. In order to render leakage and analysis of the secret information A more difficult, it is also possible to divide the secret information A into data blocks of each 1 bit or larger, and to position such data blocks in dispersed manner within the image generation unit 201.

A memory 212 stores secret information B used as a basis of the secret information Ks. The secret information B is specific to the image generation apparatus 10. The secret information B may be different from or same as the unique ID of the image generation apparatus 10. In order to render leakage and analysis of the secret information B more difficult, it is also possible to divide the secret information B into data blocks of each 1 bit or larger, and to position such data blocks in dispersed manner in the memory 212 and other memories.

A secret information generation unit 203 generates secret information Ks based on the secret information A held by the image generation unit 201 and the secret information B held by the memory 212. Such secret information Ks corresponds to a secret key in a public key cipher system (such as RSA cipher).

A calculation unit 204 executes first and second calculation processes. The first calculation process is used for generating a Hash value (also called message digest or digest data) of image data, utilizing a Hash function HF1. The second calculation process is used for converting the Hash value generated in the first calculation process into a digital signature, utilizing the secret information Ks. The Hash function HF1 can be any of MD-2, MD-5, SHA-1, RIPEMD-128 and RIPEMD-160, or any other Hash function. The digital signature generated in the calculation unit 204 is attached to the image file with the digital signature.

A memory 205 stores the unique ID (for example a manufacture number or a serial number of the image generation apparatus 10) which is specific to the image generation apparatus 10. The unique ID is attached to the image file with the digital signature.

An image file generation unit 206 generates the image file with the digital signature. The image file with the digital signature includes image data in a data portion, and, in a header portion, data such as a digital signature of the image data, a unique ID of the image generation apparatus 10, additional information of the image data etc. A file format of the image file with the digital signature may be any of JFIF (JPEG file interchange format), TIFF (tagged image file format) and GIF (graphics interchange format), or an expansion thereof, or another image file format.

A removable medium (detachable memory medium) 207, composed for example of a magnetic disk, an optical disk or a memory card, stores the image file with the digital signature.

A medium control unit 208 has a function of writing the image file with the digital signature into the removable medium 207 and a function of reading the image file with the digital signature from the removable medium 207.

An interface unit 209 transmits the image file with the digital signature, stored in the removable medium 207, to the verification apparatus 20.

An operation unit 210 is used for instructing a generation, a pickup, a reading etc. of the image data of the object.

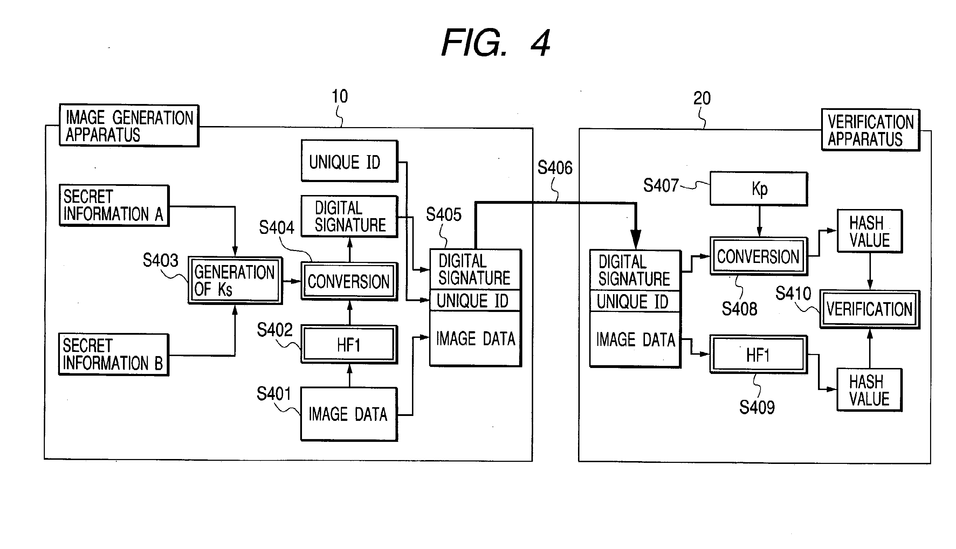

A control unit 211 has a memory and a microcomputer for executing a control program stored therein, and controls the functions of various units of the image generation apparatus 10. In particular, the memory of the control unit 211 stores a control program for controlling a process sequence of the image generation apparatus 10, to be explained in Fig. 4.

In the image verification system of the first embodiment, as explained in the foregoing, the secret information A and the secret information B, constituting basis of the secret information Ks, are positioned in dispersed manner within the image generation apparatus 10, thereby making the leakage and the analysis of the secret information Ks very difficult.

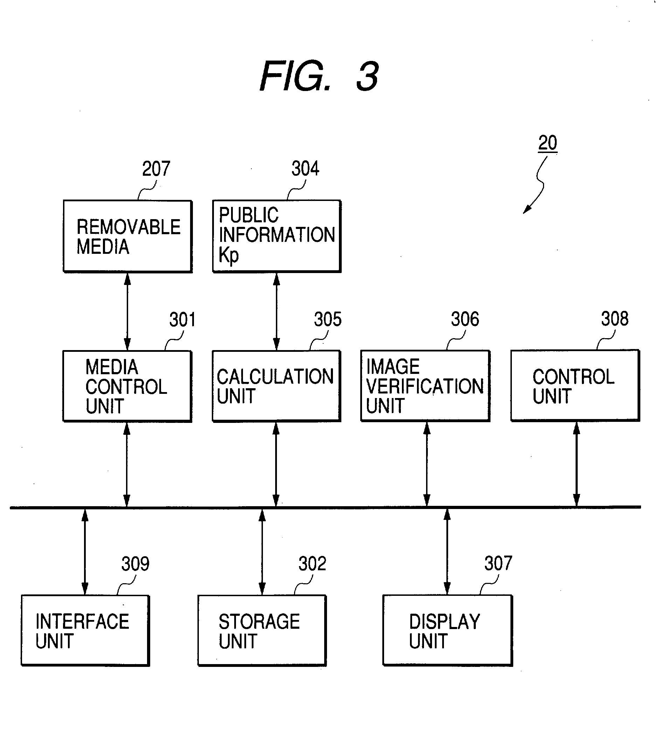

Fig. 3 is a block diagram showing the principal functional configuration of the verification apparatus 10 of the present embodiment.

A medium control unit 301 is used for reading the image file with the digital signature from the removable medium 207.

An interface unit 309 receives the image file with the digital signature transmitted from the image generation apparatus 10.

A memory unit 302 stores the image file with the digital signature.

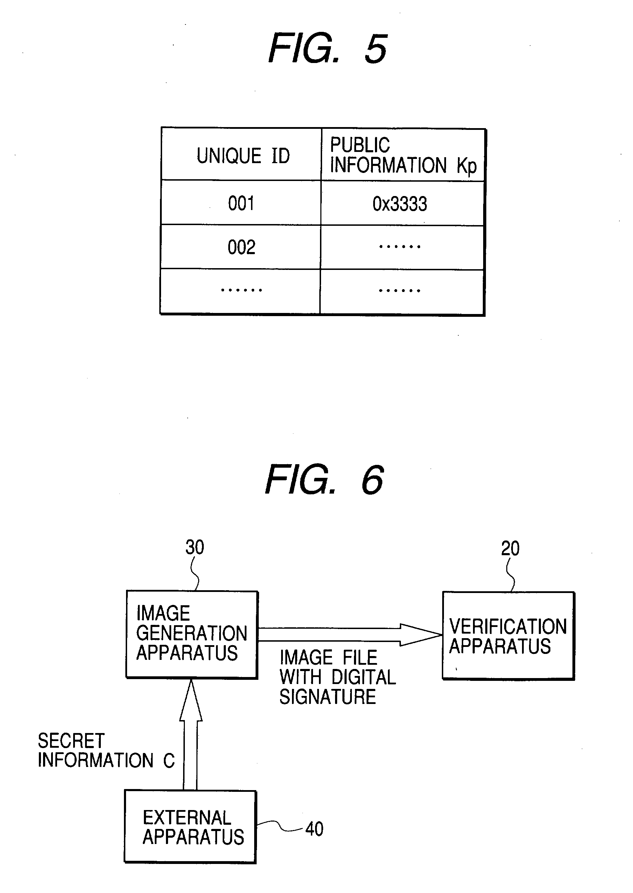

A memory 304 stores a table T1. An example of the table T1 is shown in Fig. 5. The table T1 is a management table which manages plural unique IDs and public information Kp respectively corresponding to the unique IDs. For example, in case a unique ID is "001", a public information Kp corresponding thereto is "0x3333". The public information Kp is information corresponding to the secret information ks and corresponds to a public key in a public key cipher system (such as RSA cipher system).

A calculation unit 305 executes a first calculation process for generating a Hash value (digest data) of the image data, utilizing a Hash function HF1, and a second calculation process for converting the digital signature obtained from the memory unit 302 into a Hash value, utilizing the public information Kp obtained from the memory 304.

An image verification unit 306 executes a verification whether the image data have been altered.

A display unit 307 displays information indicating a result of verification in the image verification unit 306.

A control unit 308 is provided with a memory and a microcomputer for executing a control program stored therein, and controls the functions of various units of the verification apparatus 20. In particular, the memory of the control unit 308 stores a control program for controlling the process sequence of the verification apparatus 20 to be explained in Fig. 4.

Fig. 4 is a view showing the process sequence of the image verification system of the first embodiment:
Step S401: The image generation unit 201 starts generation of image data of an object, according to an instruction from the user;
Step S402: The calculation unit 204 generates a Hash value of the image data generated in the image generation unit 201, utilizing the Hash function HF1;
Step S403: The secret information generation unit 203 generates the secret information Ks, based on the secret information A held by the image generation unit 201 and the secret information B held by the memory 212;
Step S404: The calculation unit 204 converts the Hash value, generated in the step S402, into the digital signature of the image data, utilizing the secret information Ks generated in the secret information generation unit 203;
Step S405: The image file generation unit 206 generates the image file with the digital signature, including the image data, the digital signature of the image data, the unique ID of the image generation apparatus 10, the additional information of the image data etc. The medium control unit 208 writes the image file with the digital signature, generated in the image file generation unit 206, into the removable medium 207;
Step S406: The user enters the image file with the digital signature, stored in the removable medium 207, into the verification apparatus 20 via the removable medium 207 or the interface unit 209. In case of entry via the removable medium 207, the medium control unit 301 reads the image file with the digital signature from the removable medium 207 and stores it in the memory unit 302. On the other hand, in case of entry via the interface unit 209, the interface unit 309 receives the image file with the digital signature transmitted from the image generation apparatus 10, and stores it in the memory unit 302;
Step S407: The calculation unit 305 starts the verification of the image file with the digital signature, selected by the user. In this case, the calculation unit 305 acquires the image data and the digital signature of the selected image file from the memory unit 302. Also the calculation unit 305 refers to the table T1 in the memory 304 and acquires the public information Kp corresponding to the unique ID;
Step S408: The calculation unit 305 converts the digital signature obtained from the memory unit 302 into the Hash value, utilizing the public information Kp obtained from the memory 304;
Step S409: The calculation unit 305 generates the Hash value of the image data obtained from the memory unit 302, utilizing the Hash function HF1;
Step S410: The image verification unit 306 compares the Hash value obtained in the step S408 with the Hash value obtained in the step S409, thereby verifying whether the image data have been altered.

In case the two Hash values mutually coincide (namely in case completeness of the image data can be verified), the image verification unit 306 detects that the image data have not been altered. The image verification unit 306 also detects that the image data have been generated by the image generation apparatus 10. Then the verification apparatus 20 causes the display unit 307 to display information indicating that the image data have not been altered.

On the other hand, in case the two Hash values do not mutually coincide (namely in case completeness of the image data cannot be detected), the image verification unit 306 detects that the image data have been altered. Then the verification apparatus 20 causes the display unit 307 to display that the image data have been altered.

In the image verification system of the first embodiment, as explained in the foregoing, the secret information A and the secret information B constituting the basis of the secret information Ks are positioned in dispersed manner within the image generation apparatus 10, whereby the leakage and the analysis of the secret information Ks can be made very difficult and the safety and the confidentiality of the secret information Ks can be improved.

Also, the image verification system of the second embodiment can render the leakage and the analysis of the secret information Ks very difficult, whereby the safety of the entire system can be improved.

In the first embodiment, there has been explained a system in which verification data of image data are constituted by a digital signature of such image data, but the present invention is applicable also to other systems. For example, the present invention is applicable also to a system in which verification data of image data are constituted by MAC (message authentication code) of such image data. In such case, the secret information Ks becomes information corresponding to a common key in a common key cipher system, constituting information necessary for the generation and the verification of the MAC. In such configuration, the calculation involved in the generation and the verification of the verification data can be simplified, whereby the process speed and the process cost of the system can be reduced.

In the first embodiment, there has been explained a system for generating the secret information Ks based on the secret information A and B, but the present invention is applicable also to other systems. For example, the present invention is applicable to a system for generating the secret information Ks based not only of the secret information A and B but also on another secret information held by the image generation apparatus 10.

### (Second embodiment)

In the following there will be explained a second preferred embodiment of the present invention, with reference to the accompanying drawings. In the second embodiment, there will only be explained parts different from those in the first embodiment.

Fig. 6 is a view showing the configuration of an image verification system of the second embodiment. In the second embodiment, there will be explained, as in the first embodiment, a case where verification data, required for verifying whether the image data have been altered, are a digital signature of the image data.

An image generation apparatus 30 has a function of generating image data of an object, and a function of generating an image file with a digital signature. The image file with the digital signature includes data such as image data, a digital signature for the image data, a unique ID of the image generation apparatus 30, additional information of the image data etc. The image generation apparatus 30 may be an image pickup apparatus such as a digital camera, a digital video camera or a scanner, or may be an apparatus equipped with a camera unit. Otherwise it may also be a facsimile apparatus or a copying apparatus, provided with an image reading unit.

An external apparatus 40 is rendered detachable from the image generation apparatus 30, and holds secret information C constituting a basis of the secret information Ks. The external apparatus 40 can be any apparatus that renders the leakage and the analysis of the secret information difficult. Therefore, the external apparatus 40 can be any apparatus that renders the leakage and the analysis of the secret information difficult. Therefore, the external apparatus 40 can be, for example, an IC card (or a memory medium with a microprocessor).

A verification apparatus 20 is similar in the configuration and in the function to the verification apparatus 20 explained in the first embodiment.

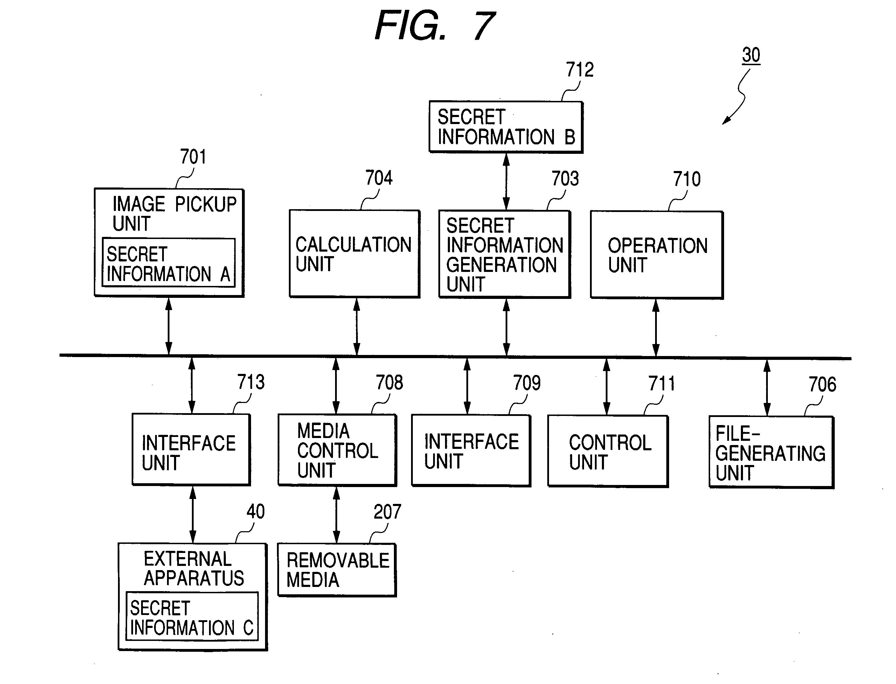

Fig. 7 is a block diagram showing the principal functional configuration of the image generation apparatus 30 in the second embodiment.

An image generation unit 701 is provided with an optical sensor such as a CCD (charge coupled device), a microprocessor etc. The image generation unit 701 is provided therein with a memory or an IC chip storing secret information A used as a basis of secret information Ks. The secret information A is used in common for plural image generation apparatus including the image generation apparatus 30. In order to render leakage and analysis of the secret information A more difficult, it is also possible to divide the secret information A into data blocks of each 1 bit or larger, and to position such data blocks in dispersed manner within the image generation unit 701.

A memory 712 stores secret information B used as a basis of the secret information Ks. The secret information B is specific to the image generation apparatus 30 and is different from the unique ID of the image generation apparatus 30. In order to render leakage and analysis of the secret information B more difficult, it is also possible to divide the secret information B into data blocks of each 1 bit or larger, and to position such data blocks in dispersed manner in the memory 712 and other memories.

A secret information generation unit 703 generates secret information Ks based on the secret information A held by the image generation unit 701, the secret information B held by the memory 712, and the secret information C held by the external apparatus 40. Such secret information Ks corresponds to a secret key in a public key cipher system (such as RSA cipher).

A calculation unit 704 executes first and second calculation processes. The first calculation process is used for generating a Hash value (also called message digest or digest data) of image data, utilizing a Hash function HF1. The second calculation process is used for converting the Hash value generated in the first calculation process into a digital signature, utilizing the secret information Ks. The digital signature generated in the calculation unit 704 is attached to the image file with the digital signature.

A memory 705 stores the unique ID (for example a manufacture number or a serial number of the image generation apparatus 30) which is specific to the image generation apparatus 30. The unique ID is attached to the image file with the digital signature.

An image file generation unit 706 generates the image file with the digital signature. The image file with the digital signature includes image data in a data portion, and, in a header portion, data such as a digital signature of the image data, a unique ID of the image generation apparatus 30, additional information of the image data etc. A file format of the image file with the digital signature may be any of JFIF (JPEG file interchange format), TIFF (tagged image file format) and GIF (graphics interchange format), or an expansion thereof, or another image file format.

A medium control unit 708 has a function of writing the image file with the digital signature into a removable medium 207 and a function of reading the image file with the digital signature from the removable medium 207.

An interface unit 709 transmits the image file with the digital signature, stored in the removable medium 207, to the verification apparatus 20.

An operation unit 710 is used for instructing a generation, a pickup, or a reading of the image data of the object.

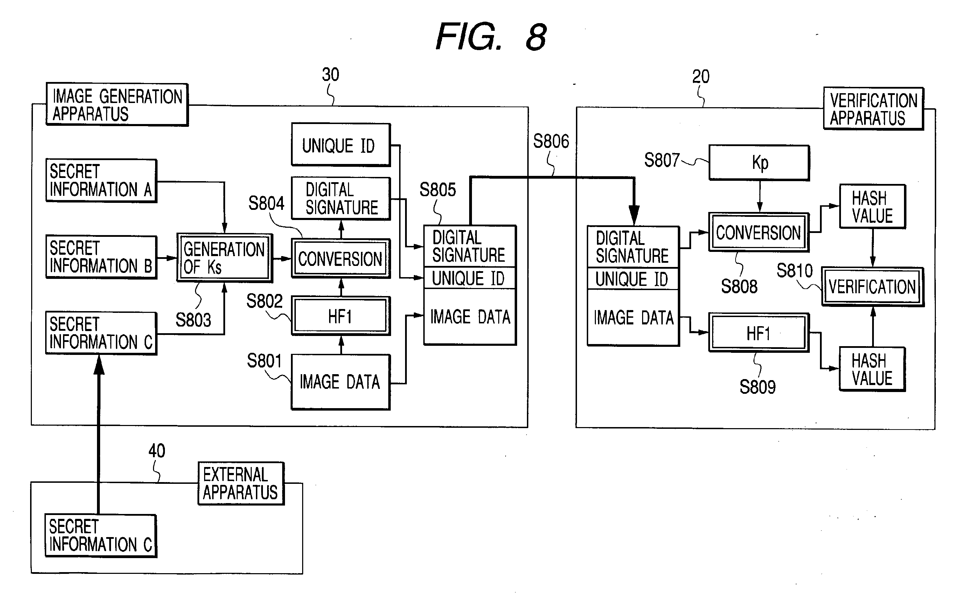

A control unit 711 has a memory and a microcomputer for executing a control program stored therein, and controls the functions of various units of the image generation apparatus 30. In particular, the memory of the control unit 211 stores a control program for controlling a process sequence of the image generation apparatus 30, to be explained in Fig. 8.

An interface unit 713 has a function of entering the secret information C held by the external apparatus 40. The secret information C is specific to the external apparatus 40. If the secret information C is made different for each user, such secret information C may be regarded as information specific to the user.

In the image verification system of the second embodiment, as explained in the foregoing, the secret information A and the secret information B, constituting basis of the secret information Ks, are positioned in dispersed manner within the image generation apparatus 30, and also the secret information C constituting basis of the secret information Ks is positioned in the external apparatus 40, thereby making the leakage and the analysis of the secret information Ks very difficult.

Fig. 8 is a view showing the process sequence of the image verification system of the second embodiment:
Step S801: The image generation unit 701 starts generation of image data of an object, according to an instruction from the user;
Step S802: The calculation unit 704 generates a Hash value of the image data generated in the image generation unit 701, utilizing the Hash function HF1;
Step S803: The secret information generation unit 703 generates the secret information Ks, based on the secret information A held by the image generation unit 701, the secret information B held by the memory 712 and the secret information C held by the external apparatus 40;
Step S804: The calculation unit 704 converts the Hash value, generated in the step S802, into the digital signature of the image data, utilizing the secret information Ks generated in the secret information generation unit 703;
Step S805: The image file generation unit 706 generates the image file with the digital signature, including the image data, the digital signature of the image data, the unique ID of the image generation apparatus 30, the additional information of the image data etc. The medium control unit 708 writes the image file with the digital signature, generated in the image file generation unit 706, into the removable medium 207;
Step S806: The user enters the image file with the digital signature, stored in the removable medium 207, into the verification apparatus 20 via the removable medium 207 or the interface unit 709. In case of entry via the removable medium 207, the medium control unit 301 reads the image file with the digital signature from the removable medium 207 and stores it in the memory unit 302. On the other hand, in case of entry via the interface unit 709, the interface unit 309 receives the image file with the digital signature transmitted from the image generation apparatus 30, and stores it in the memory unit 302;
Step S807: The calculation unit 305 starts the verification of the image file with the digital signature, selected by the user. In this case, the calculation unit 305 acquires the image data and the digital signature of the selected image file from the memory unit 302. Also the calculation unit 305 refers to the table T1 and acquires the public information Kp corresponding to the unique ID;
Step S808: The calculation unit 305 converts the digital signature obtained from the memory unit 302 into the Hash value, utilizing the public information Kp obtained from the memory 304;
Step S809: The calculation unit 305 generates the Hash value of the image data obtained from the memory unit 302, utilizing the Hash function HF1;
Step S810: The image verification unit 306 compares the Hash value obtained in the step S808 with the Hash value obtained in the step S809, thereby verifying whether the image data have been altered.

In case the two Hash values mutually coincide (namely in case completeness of the image data can be verified), the image verification unit 306 detects that the image data have not been altered. The image verification unit 306 also detects that the image data have been generated by the image generation apparatus 30. Then the verification apparatus 20 causes the display unit 307 to display information indicating that the image data have not been altered.

On the other hand, in case the two Hash values do not mutually coincide (namely in case completeness of the image data cannot be detected), the image verification unit 306 detects that the image data have been altered. Then the verification apparatus 20 causes the display unit 307 to display that the image data have been altered.

In the image verification system of the second embodiment, as explained in the foregoing, the secret information A and the secret information B constituting the basis of the secret information Ks are positioned in dispersed manner within the image generation apparatus 30, and the secret information C constituting the basis of the secret information Ks is positioned in the external apparatus 40, whereby the leakage and the analysis of the secret information Ks can be made very difficult and the safety and the confidentiality of the secret information Ks can be improved.

Also, the image verification system of the second embodiment can render the leakage and the analysis of the secret information Ks very difficult, whereby the safety of the entire system can be improved.

In the second embodiment, there has been explained a system in which verification data of image data are constituted by a digital signature of such image data, but the present invention is applicable also to other systems. For example, the present invention is applicable also to a system in which verification data of image data are constituted by MAC (message authentication code) of such image data. In such case, the secret information Ks becomes information corresponding to a common key in a common key cipher system, constituting information necessary for the generation and the verification of the MAC. In such configuration, the calculation involved in the generation and the verification of the verification data can be simplified, whereby the process speed and the process cost of the system can be reduced.

In the second embodiment, there has been explained a system for generating the secret information Ks based on the secret information A, B and C, but the present invention is applicable also to other systems. For example, the present invention is applicable to a system for generating the secret information Ks based not only on the secret information A, B and C but also on another secret information held by the image generation apparatus 30.

The above-described embodiments are merely exemplary of this invention, and are not be construed to limit the scope of the present invention.

The scope of the present invention is defined by the scope of the appended claims, and is not limited to only the specific descriptions in this specification. Furthermore, all the modifications and changes belonging to equivalents of the claims are considered to fall within the scope of the present invention.

## Claims

1. An image generation apparatus comprising:
image generation means which generates image data;
secret information generation means which generates secret information based on first information and second information; and
verification data generation means which generates, utilizing said secret information, verification data necessary for verifying whether said image data have been altered.

2. An apparatus according to claim 1, wherein said first information and said second information are positioned in dispersed manner in said image generation apparatus.

3. An apparatus according to claim 1, wherein said first information is held by said image generation means.

4. An apparatus according to claim 1, wherein said second information is held by a memory in said image generation apparatus.

5. An apparatus according to claim 1, wherein said first information is common to plural image generation apparatuses including said image generation apparatus, and said second information is specific to said image generation apparatus.

6. An apparatus according to claim 1, wherein said secret information is a secret key in a public key cipher system.

7. An apparatus according to claim 1, wherein said verification data are a digital signature.

8. An apparatus according to claim 1, wherein said verification data are a MAC (message authentication code).

9. An apparatus according to claim 1, wherein said image generation apparatus is a digital camera, a digital video camera, a scanner, a facsimile apparatus or a copying apparatus.

10. A verification data generation method comprising steps of:
generating image data;
generating secret information based on first information and second information; and
generating, utilizing said secret information, verification data necessary for verifying whether said image data have been altered.

11. A method according to claim 10, wherein said first information and said second information are positioned in dispersed manner in an image generation apparatus.

12. A method according to claim 10, wherein said first information is held by image generation means in said image generation apparatus.

13. A method according to claim 10, wherein said second information is held by a memory in said image generation apparatus.

14. A method according to claim 10, wherein said first information is common to plural image generation apparatuses including said image generation apparatus, and said second information is specific to said image generation apparatus.

15. A method according to claim 10, wherein said secret information is a secret key in a public key cipher system.

16. A method according to claim 10, wherein said verification data are a digital signature.

17. A method according to claim 10, wherein said verification data are a MAC (message authentication code).

18. A method according to claim 10, wherein said image generation apparatus is a digital camera, a digital video camera, a scanner, a facsimile apparatus or a copying apparatus.

19. An image generation apparatus comprising:
image generation means which generates image data;
secret information generation means which generates secret information based on first information and second information, and third information held by an external apparatus; and
verification data generation means which generates, utilizing said secret information, verification data necessary for verifying whether said image data have been altered.

20. An apparatus according to claim 19, wherein said first information and said second information are positioned in dispersed manner in said image generation apparatus.

21. An apparatus according to claim 19, wherein said first information is held by said image generation means.

22. An apparatus according to claim 19, wherein said second information is held by a memory in said image generation apparatus.

23. An apparatus according to claim 19, wherein said first information is common to plural image generation apparatuses including said image generation apparatus, and said second information is specific to said image generation apparatus.

24. An apparatus according to claim 19, wherein said secret information is a secret key in a public key cipher system.

25. An apparatus according to claim 19, wherein said verification data are a digital signature.

26. An apparatus according to claim 19, wherein said verification data are a MAC (message authentication code).

27. An apparatus according to claim 19, wherein said image generation apparatus is a digital camera, a digital video camera, a scanner, a facsimile apparatus or a copying apparatus.

28. A verification data generation method comprising steps of:
generating image data;
generating secret information based on first information and second information, and third information held by an external apparatus; and
generating, utilizing said secret information, verification data necessary for verifying whether said image data have been altered.

29. A method according to claim 28, wherein said first information and said second information are positioned in dispersed manner in an image generation apparatus.

30. A method according to claim 28, wherein said first information is held by image generation means in said image generation apparatus.

31. A method according to claim 28, wherein said second information is held by a memory in said image generation apparatus.

32. A method according to claim 28, wherein said first information is common to plural image generation apparatuses including said image generation apparatus, while said second information is specific to said image generation apparatus, and said third information is specific to said external apparatus.

33. A method according to claim 28, wherein said secret information is a secret key in a public key cipher system.

34. A method according to claim 28, wherein said verification data are a digital signature.

35. A method according to claim 28, wherein said verification data are a MAC (message authentication code).

36. A method according to claim 28, wherein said image generation apparatus is a digital camera, a digital video camera, a scanner, a facsimile apparatus or a copying apparatus.
